# EUROPEAN PATENT APPLICATION

(11) **EP 4 444 009 A1**
(43) Date of publication of application: **09.10.2024**
(21) Application number: 21966062.8
(22) Date of filing: 02.12.2021
(51) Int. Cl.: H04W 72/12

(54) **METHOD AND APPARATUS FOR DETERMINING TIME SLOT OFFSET BETWEEN HYBRID AUTOMATIC REPEAT REQUESTS, AND METHOD AND APPARATUS FOR INDICATING TIME SLOT OFFSET BETWEEN HYBRID AUTOMATIC REPEAT REQUESTS**

(71) Applicant: Beijing Xiaomi Mobile Software Co., Ltd., Beijing 100085 (CN)
(72) Inventor: YAN, Kaiyue, Beijing 100085 (CN)
(74) Representative: Gunzelmann, Rainer
(86) International application number: PCT/CN2021/135197
(87) International publication number: WO 2023/097630

(57) **Abstract**

A method for determining a time slot offset between hybrid automatic repeat requests (HARQs), executed by a user equipment (UE), and comprising: receiving downlink control information (DCI) sent by a network device, one or more domains in the DCI being multiplexed to carry time slot offset information between an initial transmission HARQ and a retransmission HARQ; and obtaining, from the DCI, time slot offset information occupying a predetermined number of bits, and determining a time slot offset between the initial transmission HARQ and the retransmission HARQ on the basis of the time slot offset information.

## Description

### TECHNICAL FIELD

The disclosure relates to the field of mobile communication technology, in particular to a method and an apparatus for determining a slot offset for Hybrid Automatic Repeat reQuest (HARQ), and a method and an apparatus for indicating a slot offset for HARQ.

### BACKGROUND

The Industrial Internet of Things (IIoT) and Ultra-reliable and low-latency communication (uRLLC) have laid a foundation for commercialization of fifth generation (5G) communication systems. In the 5G R17 standard, for the technologies of IIoT/uRLLC, it is proposed to use one-shot retransmission for transmitting a canceled HARQ feedback. However, there is no effective solution on how to indicate and determine a slot offset between a new HARQ transmission and a HARQ retransmission.

### SUMMARY

The disclosure provides a method and an apparatus for determining a slot offset for Hybrid Automatic Repeat reQuest (HARQ) and a method and an apparatus for indicating a slot offset for HARQ, which fills a technical gap in the related art of how to indicate and determine a slot offset between a new HARQ transmission and a HARQ retransmission when one-shot retransmission is used for HARQ feedback, thereby facilitating the implementation of the HARQ feedback using the one-shot retransmission.

According to a first aspect of embodiments of the disclosure, a method for determining a slot offset for the HARQ, performed by a user equipment (UE), is provided. The method includes: receiving Downlink Control Information (DCI) sent by a network device, in which one or more fields in the DCI are multiplexed to carry slot offset information between a new HARQ transmission and a HARQ retransmission; and obtaining, from the DCI, the slot offset information occupying a preset number of bits, and determining a slot offset between the new HARQ transmission and the HARQ retransmission based on the slot offset information.

In some embodiments, the slot offset information is carried in a preset multiplexing priority order in one or more fields in the DCI.

In some embodiments, the one or more fields include one or more of a Modulation and coding scheme (MCS) field of a first Translation block (TB), a Redundancy Version (RV) field of the first TB, or a New data indicator (NDI) field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

In some embodiments, the preset number of bits is a fixed value or a changeable value range.

In some embodiments, the method further includes: determining the preset number of bits based on pre-agreed information.

In some embodiments, the method further includes: determining the preset number of bits based on a Radio Resource Control (RRC) configuration message sent by the network device.

In some embodiments, the method further includes: determining a set of selectable values based on pre-agreed information for the preset number of bits; and selecting a value from the set of selectable values, as the preset number of bits, based on an RRC configuration message, a Media Access Control-Control Element (MAC-CE) signaling or DCI sent by the network device.

According to a second aspect of embodiments of the disclosure, a method for indicating a slot offset for HARQ, performed by a network device, is provided. The method includes: sending DCI to a UE, in which one or more fields in the DCI are multiplexed to carry slot offset information between a new HARQ transmission and a HARQ retransmission.

In some embodiments, the slot offset information is carried in a preset multiplexing priority order in one or more fields in the DCI.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

In some embodiments, a number of bits occupied by the slot offset information is a fixed value or a changeable value range.

In some embodiments, the method further includes: sending a RRC configuration message to the UE, the RRC configuration message being used to indicate a number of bits occupied by the slot offset information.

In some embodiments, the method further includes: sending an RRC configuration message, a MAC-CE signaling or another DCI to the UE, in which the RRC configuration message, the MAC-CE signaling or another DCI is used to indicate the UE to select a value from a set of selectable values as a number of bits occupied by the slot offset information, and the set of selectable values is determined by the UE based on pre-agreed information.

According to a third aspect of embodiments of the disclosure, an apparatus for determining a slot offset for HARQ is provided. The apparatus includes: a transceiver module configured to receive DCI sent by a network device, in which one or more fields in the DCI are multiplexed to carry slot offset information between a new HARQ transmission and a HARQ retransmission; and a processing module configured to obtain, from the DCI, the slot offset information occupying a preset number of bits and determine a slot offset between the new HARQ transmission and the HARQ retransmission based on the slot offset information.

According to a fourth aspect of embodiments of the disclosure, an apparatus for indicating a slot offset for HARQ is provided. The apparatus includes: a transceiver module configured to send DCI to a UE, in which one or more fields in the DCI are multiplexed to carry slot offset information between a new HARQ transmission and a HARQ retransmission.

According to a fifth aspect of embodiments of the disclosure, a communication device is provided. The communication device includes a transceiver, a memory, and a processor connected to the transceiver and the memory. The processor is configured to control transmitting and receiving of wireless signals of the transceiver by executing computer-executable instructions on the memory, and the processor is caused to perform the method for determining a slot offset for HARQ according to embodiments of the first aspect or the method for indicating a slot offset for HARQ according to embodiments of the second aspect.

According to a sixth aspect of embodiments of the disclosure, a computer storage medium having computer executable instructions stored thereon is provided. When the computer executable instructions are executed by a processor, the method for determining a slot offset for HARQ according to embodiments of the first aspect or the method for indicating a slot offset for HARQ according to embodiments of the second aspect is performed.

With the method and the apparatus for determining a slot offset for the HARQ according to embodiments of the disclosure, the UE receives the DCI sent by the network device, in which one or more fields in the DCI are multiplexed to carry the slot offset information between the new HARQ transmission and the HARQ retransmission. The UE obtains from the DCI the slot offset information occupying the preset number of bits, to determine the slot offset between the new HARQ transmission and the HARQ retransmission, which fills a technical gap in the related art of how to determine the slot offset between the new HARQ transmission and the HARQ retransmission when the one-shot retransmission is used for the HARQ feedback, thereby facilitating the implementation of the HARQ feedback using the one-shot retransmission.

With the method and the apparatus for indicating a slot offset for the HARQ according to embodiments of the disclosure, the network device sends the DCI to the UE, in which one or more fields in the DCI are multiplexed to carry slot offset information between a new HARQ transmission and a HARQ retransmission, which fills a technical gap in the related art of how to indicate a slot offset between the new HARQ transmission and the HARQ retransmission when the one-shot retransmission is used for the HARQ feedback, thereby facilitating the implementation of the HARQ feedback using the one-shot retransmission.

Additional aspects and advantages of the disclosure will be given in part in the following descriptions, become apparent in part from the following descriptions, or be learned from the practice of the disclosure.

### BRIEF DESCRIPTION OF THE DRAWINGS

The above and/or additional aspects and advantages of embodiments of the disclosure will become apparent and more readily appreciated from the following descriptions made with reference to the accompanying drawings.
FIG. 1 is a schematic diagram illustrating a communication system according to an embodiment of the disclosure.
FIG. 2 is a flowchart illustrating a method for determining a slot offset for Hybrid Automatic Repeat reQuest (HARQ) according to an embodiment of the disclosure.
FIG. 3 is a flowchart illustrating a method for determining a slot offset for HARQ according to an embodiment of the disclosure.
FIG. 4 is a flowchart illustrating a method for indicating a slot offset for HARQ according to an embodiment of the disclosure.
FIG. 5 is a flowchart illustrating a method for indicating a slot offset for HARQ according to an embodiment of the disclosure.
FIG. 6 is a block diagram illustrating an apparatus for determining a slot offset for HARQ according to an embodiment of the disclosure.
FIG. 7 is a block diagram illustrating an apparatus for indicating a slot offset for HARQ according to an embodiment of the disclosure.
FIG. 8 is a schematic diagram illustrating a communication device according to an embodiment of the disclosure.
FIG. 9 is a schematic diagram illustrating a chip according to an embodiment of the disclosure.

### DETAILED DESCRIPTION

Reference will now be made in detail to embodiments, examples of which are illustrated in the accompanying drawings, in which the same or similar numbers represent the same or similar elements or elements with the same or similar functions. The embodiments described below with reference to the drawings are exemplary and are intended to explain the disclosure, and should not be construed as limiting the disclosure.

In order to better understand a method and an apparatus for determining a slot offset for Hybrid Automatic Repeat reQuest (HARQ), a communication system to which embodiments of the disclosure are applied is first described below.

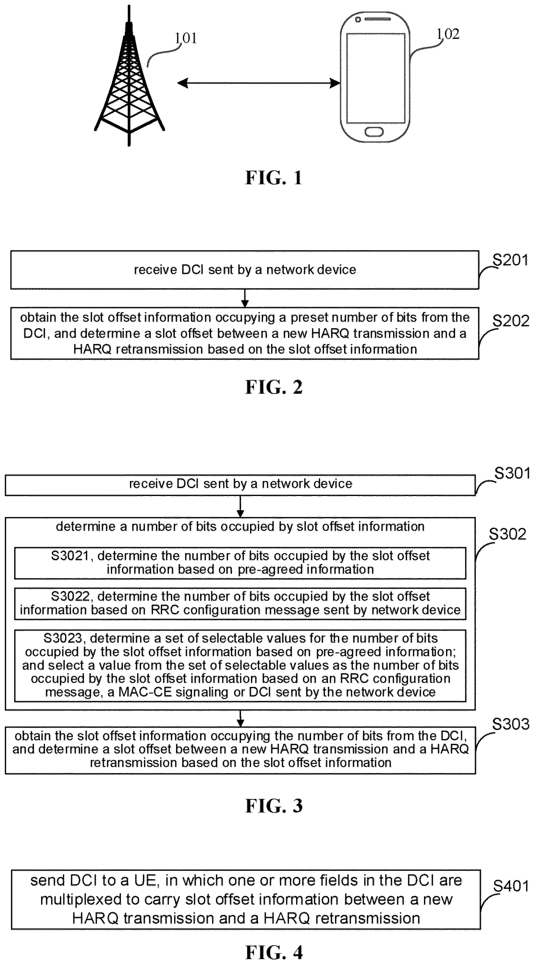

FIG. 1 is a schematic diagram illustrating a communication system according to an embodiment of the disclosure. As illustrated in FIG. 1, the communication system may include, but is not limited to, one network device and one User Equipment (UE). The number and the form of devices illustrated in FIG. 1 are only for examples and do not constitute a limitation on embodiments of the disclosure, and two or more network devices and two or more UEs may be included in practical applications. The communication system illustrated in FIG. 1 includes, for example, one network device 101 and one UE 102.

It is noteworthy that the technical solutions according to embodiments of the disclosure may be applied to various communication systems, such as, a long term evolution (LTE) system, a 5th generation (5G) mobile communication system, a 5G new radio (NR) system, or other future new mobile communication systems.

The network device 101 in embodiments of the disclosure is an entity for transmitting or receiving signals on a network side. For example, the network device 101 may be an evolved NodeB (eNB), a transmission reception point (TRP), a next generation NodeB (gNB) in a NR system, a base station in other future mobile communication systems or an access node in a wireless fidelity (WiFi) system. The specific technology and specific device form adopted by the network device are not defined in embodiments of the disclosure. The network device according to embodiments of the disclosure may be composed of central unit(s) (CU) and distributed unit(s) (DU). The CU may also be called control unit. The use of CU-DU structure allows to divide a protocol layer of the network device, such as a base station, such that some of the protocol layer functions are placed in the CU for centralized control, and some or all of the remaining functions of the protocol layer are distributed in the DU, and the DU is centrally controlled by the CU.

The UE 102 according to embodiments of the disclosure is an entity for receiving or transmitting signals on a user side, such as a cellular phone. The UE 102 may also be referred to as terminal, mobile station (MS), mobile terminal (MT), and the like. The UE 102 may be a vehicle with communication functions, a smart vehicle, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the UE are not limited in embodiments of the disclosure.

It is understandable that the communication system described in embodiments of the disclosure is intended to clearly illustrate the technical solutions according to embodiments of the disclosure, and does not constitute a limitation on the technical solutions according to embodiments of the disclosure. It is understandable by those skilled in the art that as system architectures evolve and new business scenarios emerge, the technical solutions according to embodiments of the disclosure are also applicable to similar technical problems.

In the 5G R17 standard, for Industrial Internet of Things (IIoT) or Ultra-reliable and low-latency communication (uRLLC), it is proposed to use one-shot retransmission for transmitting a canceled HARQ feedback. However, there is no effective solution on how to indicate and determine a slot offset between a new HARQ transmission and a HARQ retransmission.

In view of this, the disclosure provides a method and an apparatus for determining a slot offset for the HARQ and a method and an apparatus for indicating a slot offset for the HARQ, which fill a technical gap in the related art of how to indicate and determine a slot offset between a new HARQ transmission and a HARQ retransmission when one-shot retransmission is used for HARQ feedback, thereby facilitating the implementation of HARQ feedback using one-shot retransmission.

The method and the apparatus for determining a slot offset for the HARQ and the method and the apparatus for indicating a slot offset for the HARQ according to the disclosure will be described in detail below in combination with the accompanying drawings.

FIG. 2 is a flowchart illustrating a method for determining a slot offset for the HARQ according to an embodiment of the disclosure. As illustrated in FIG. 2, the method is performed by a UE. The method includes the following.

At step S201, downlink control information (DCI) sent by a network device is received.

One or more fields in the DCI are multiplexed to carry slot offset information between a new HARQ transmission and a HARQ retransmission.

After one-shot retransmission is triggered, the DCI is no longer used for scheduling Physical Downlink Shared Channel (PDSCH) data, so unused fields in the DCI may be used to indicate the slot offset between the new HARQ transmission and the HARQ retransmission.

In some embodiments, the slot offset information is carried in one or more fields in the DCI in a preset multiplexing priority order.

One or more fields in the DCI may be multiplexed to carry the slot offset information in the preset multiplexing priority order. For example, each of the one or more fields in the DCI for carrying the slot offset information has a different multiplexing priority. One or more fields in the DCI may be multiplexed in a descending order of their multiplexing priorities or one or more fields in the DCI may be multiplexed in an ascending order of their multiplexing priorities. For example, when one or more fields in the DCI are multiplexed in the descending order of their multiplexing priorities, the field with the highest multiplexing priority may be multiplexed first. If the bits in this field is not enough for carrying the slot offset information, the field with the second highest multiplexing priority may be multiplexed, and so on, and the field with the lowest multiplexing priority is multiplexed last.

In some embodiments, the one or more fields include one or more of a Modulation and coding scheme (MCS) field of a first Translation block (TB), a Redundancy Version (RV) field of the first TB, or a New data indicator (NDI) field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

When multiplexing one or more fields in the DCI to carry the slot offset information, one or more of the MCS field, the RV field or the NDI field of only the first one of the plurality of TBs scheduled by the DCI are used for multiplexing. In some embodiments, the multiplexing priorities of the MCS field, the RV field and the NDI field are ranked in a descending order.

For example, assuming that usable bits in the MCS field include a total of N1 bits, namely, M₁ to M_{N1}, the usable bits in the RV field include a total of N2 bits, namely, R₁ to R_{N2}, and the usable bits in the NDI field include a total of N3 bits, namely, N₁ to N_{N3}, and the number of bits occupied by the slot offset information is N4, when multiplexing one or more fields in the DCI to carry the slot offset information, the MCS field may be prioritized for multiplexing to carry the slot offset information, i.e., the slot offset information is carried in the MCS field. If the bits in the MCS field are not enough for carrying the information, i.e., N4>N1, the RV field may be multiplexed, i.e., the slot offset information is carried in the MCS field and the RV field. For example, N1 bits in the MCS field and (N4-N1) bits in the RV field may be occupied. If the bits in the MCS field and the RV field are still not enough for carrying the information, i.e., N4>N1+N2, the NDI field may be multiplexed. That is, the slot offset information may be carried in the MCS field, the RV field and the NDI field. For example, N1 bits in the MCS field, N2 bits in the RV field and (N4-N1-N2) bits in the NDI field may be used to carry the information.

In some embodiments, for each multiplexed field of the one or more fields, the slot offset information may be carried in an order from low bit to high bit in the field.

When multiplexing a certain field in the DCI, bits in the field may be multiplexed to carry the slot offset information from the low bit to the high bit. For example, based on the above example, the usable bits in the MCS field are M₁, M₂......M_{N1} from low bit to high bit, the usable bits in the RV field are R₁, R₂......R_{N2} from low bit to high bit, and the usable bits in the NDI field are N₁, N₂...... N_{N3} from low bit to high bit. When multiplexing the MCS field to carry the slot offset information, M₁, M₂......M_{N1} in the MCS field are used sequentially until the last bit (i.e., M_{N1}) is used. If the bits in the MCS field are not enough, the RV field is multiplexed to carry the information. That is, the bits in the RV field (i.e., R₁, R₂......R_{N2}) may also be used in this order.

In some embodiments, a bit that is not used to carry the slot offset information in each multiplexed field of the one or more fields is padded with 0.

With reference to the above examples, if N4=N1+2, it indicates that N1 bits in the MCS field and 2 bits in the RV field are occupied to carry the slot offset information, and then each of the remaining (N2-2) bits in the RV field is padded with 0.

At step S202, the slot offset information occupying a preset number of bits is obtained from the DCI, and a slot offset between the new HARQ transmission and the HARQ retransmission is determined based on the slot offset information.

In some embodiments, the preset number of bits, i.e., a number of bits occupied by the slot offset information, may be a fixed value or a changeable value range.

In some embodiments, the UE may pre-agree with the network device on the number of bits occupied by the slot offset information. In another embodiment, the UE may determine the number of bits occupied by the slot offset information via a Radio Resource Control (RRC) configuration message.

In some embodiments, the UE may pre-agree with the network device that the number of bits occupied by the slot offset information is 4 or the network device may indicate via the RRC configuration message that the number of bits occupied by the slot offset information is 4. For example, the UE may pre-agree with the network device that the number of bits occupied by the slot offset information is a value selected from {2, 4, 6, 8}, and the network device further indicates the specific value via an RRC configuration message, a Media Access Control-Control Element (MAC-CE) signaling, or DCI.

In other examples, the UE may pre-agree with the network device that the number of bits occupied by the slot offset information is a value selected from {3, 4, 5, 6}, or the network device may indicate via an RRC configuration message that the number of bits occupied by the slot offset information is a value selected from {3, 4, 5, 6}.

After receiving the DCI carrying the slot offset information from the network device, the UE may obtain the slot offset information from the DCI in accordance with a preset number of bits. That is, the UE may pre-determine the number of bits occupied by the slot offset information and obtain, from the DCI, the slot offset information occupying the corresponding number of bits. The UE may determine a slot offset between the new HARQ transmission and the HARQ retransmission based on the slot offset information.

For example, assuming that the UE predetermines that the number of bits occupied by the slot offset information is 4, and the UE and the network device pre-agree to carry the slot offset information by sequentially multiplexing, in the descending order of multiplexing priority, the MCS field, the RV field and the NDI field of the first TB scheduled by the DCI. After receiving the DCI, the UE may obtain 4-bit slot offset information from the multiplexed bits in each multiplexed field of the MCS field, the RV field and the NDI field of the first TB in turn.

For example, assuming that the UE predetermines that the number of bits occupied by the slot offset information is a value selected from {3, 4, 5, 6}, and the UE and the network device pre-agree to carry the slot offset information by sequentially, in the descending order of multiplexing priority, multiplexing the MCS field, the RV field and the NDI field of the first TB scheduled by the DCI. After receiving the DCI, the UE may perform the blind detection on the MCS field, the RV field and the NDI field of the first TB to obtain the slot offset information from the multiplexed bits in these fields. For example, if all bits in the MCS field are multiplexed, only a first one of bits in the RV field is multiplexed, the remaining bits are padded with 0, and all bits in the NDI field are padded with 0, the slot offset information is obtained from all bits in the MCS field and the first bit in the RV field.

With the method for determining a slot offset for HARQ according to embodiments of the disclosure, the UE may receive the DCI sent by the network device, in which one or more fields in the DCI are multiplexed to carry the slot offset information between the new HARQ transmission and the HARQ retransmission. The UE obtains from the DCI the slot offset information occupying the preset number of bits, to determine the slot offset between the new HARQ transmission and the HARQ retransmission, which fills a technical gap in the related art of how to determine the slot offset between the new HARQ transmission and the HARQ retransmission when the one-shot retransmission is used for HARQ feedback, thereby facilitating the implementation of the HARQ feedback using the one-shot retransmission.

FIG. 3 is a flowchart illustrating a method for determining a slot offset for HARQ according to an embodiment of the disclosure. As illustrated in FIG. 3, the method is performed by a UE. The method includes the following.

At step S301, DCI sent by a network device is received.

One or more fields in the DCI are multiplexed to carry slot offset information between a new HARQ transmission and a HARQ retransmission.

In some embodiments, the slot offset information is carried in one or more fields in the DCI in a preset multiplexing priority order.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

Detailed descriptions of the above step S301 and its related details may be referred to the descriptions of the step S201 and its related details, which will not be repeated here.

At step S302, a preset number of bits occupied by slot offset information is determined.

In some embodiments, the number of bits occupied by the slot offset information is a fixed value or a changeable value range.

For example, the number of bits occupied by the slot offset information may be 4, or the number of bits occupied by the slot offset information may be a value selected from {2, 4, 6, 8}, or the number of bits occupied by the slot offset information may be from 3 to 6.

In some embodiments, the above step S302 may include any of the following.

At step S3021, the preset number of bits occupied by the slot offset information is determined based on pre-agreed information.

In this embodiment, the number of bits occupied by the slot offset information may be determined based on a protocol. For example, the UE may pre-agree with the network device on the number of bits occupied by the slot offset information, and the UE determines the number of bits occupied by the slot offset information based on the agreement.

At step S3022, the preset number of bits occupied by the slot offset information is determined based on a RRC configuration message sent by the network device.

In this embodiment, the number of bits occupied by the slot offset information may be indicated through the RRC configuration message. For example, the network device may send an RRC configuration message to the UE, in which the RRC configuration message indicates the number of bits occupied by the slot offset information, so that the UE may determine the number of bits occupied by the slot offset information based on the RRC configuration message.

At step S3023, a set of selectable values is determined for the preset number of bits occupied by the slot offset information based on pre-agreed information, and a value is selected, based on an RRC configuration message, a MAC-CE signaling or DCI sent by the network device, from the set of selectable values as the preset number of bits.

In this embodiment, the set of selectable values may be determined for the number of bits occupied by the slot offset information based on a protocol, and the number of bits occupied by the slot offset information may be determined, based on the RRC configuration message, the MAC-CE signaling, or the DCI sent by the network device, from the set of selectable values.

For example, the UE may pre-agree with the network device that the number of bits occupied by the slot offset information is a value selected from {2, 4, 6, 8}, and the network device further indicates the specific value via the RRC configuration message, the MAC-CE signaling or the DCI.

At step S303, the slot offset information occupying a preset number of bits is obtained from the DCI, and a slot offset between the new HARQ transmission and the HARQ retransmission is determined based on the slot offset information.

Detailed descriptions of the above step S303 and its related details may be referred to the descriptions of the step S202 and its related details, which will not be repeated here.

It is noteworthy that the order of execution of steps S301 to S303 described above is not necessary as described above, but may be executed in other orders. For example, the step S302 may be executed at the same time as or before the step S301.

With the method for determining a slot offset for the HARQ according to embodiments of the disclosure, the UE may receive the DCI sent by the network device, in which one or more fields in the DCI are multiplexed to carry the slot offset information between the new HARQ transmission and the HARQ retransmission. The UE obtains the slot offset information occupying the preset number of bits from the DCI, to determine the slot offset between the new HARQ transmission and the HARQ retransmission, which fills a technical gap in the related art of how to determine a slot offset between the new HARQ transmission and the HARQ retransmission when the one-shot retransmission is used for the HARQ feedback, thereby facilitating the implementation of the HARQ feedback using the one-shot retransmission.

FIG. 4 is a flowchart illustrating a method for indicating a slot offset for HARQ according to an embodiment of the disclosure. As illustrated in FIG. 4, the method is performed by a network device. The method includes the following.

At step S401, DCI is sent to a UE.

One or more fields in the DCI are multiplexed to carry slot offset information between a new HARQ transmission and a HARQ retransmission.

After the one-shot retransmission is triggered, the DCI is no longer used for scheduling PDSCH data, so unused fields in the DCI may be used to indicate the slot offset between the new HARQ transmission and the HARQ retransmission.

In some embodiments, the slot offset information is carried in one or more fields in the DCI in a preset multiplexing priority order.

One or more fields in the DCI may be multiplexed to carry the slot offset information in the preset multiplexing priority order. For example, each of the one or more fields in the DCI for carrying the slot offset information has a different multiplexing priority. One or more fields in the DCI may be multiplexed in a descending order of their multiplexing priorities or one or more fields in the DCI may be multiplexed in an ascending order of their multiplexing priorities. For example, when one or more fields in the DCI are multiplexed in the descending order of their multiplexing priorities, the field with the highest multiplexing priority may be multiplexed first. If the bits in this field are not enough for carrying the slot offset information, the field with the second highest multiplexing priority may be multiplexed, and so on, and the field with the lowest multiplexing priority is multiplexed last.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

When multiplexing one or more fields in the DCI to carry the slot offset information, one or more of the MCS field, the RV field and the NDI field of only the first one of the plurality of TBs scheduled by the DCI are used for multiplexing. In some embodiments, the multiplexing priorities of the MCS field, the RV field and the NDI field are ranked in a descending order.

In some embodiments, for each multiplexed field of the one or more fields, the slot offset information is carried in an order from low bit to high bit in the field.

When multiplexing a certain field in the DCI, bits in the field may be multiplexed to carry the slot offset information from the low bit to the high bit.

In some embodiments, a bit that is not used to carry the slot offset information in each multiplexed field of the one or more fields is padded with 0.

For example, assuming that the slot offset information needs to occupy N4 bits, the MCS field of the first one of the plurality of TBs scheduled by the DCI has N1 usable bits, the RV field of the first TB has N2 usable bits, and the NDI field of the first TB has N3 usable bits, if N4=N1+2, it indicates that N1 bits in the MCS field and 2 bits in the RV field are occupied to carry the slot offset information, and the remaining (N2-2) bits in the RV field are padded with 0.

In some embodiments, the number of bits occupied by the slot offset information is a fixed value or a changeable value range.

For example, the number of bits occupied by the slot offset information may be 4, or the number of bits occupied by the slot offset information may be a value selected from {2, 4, 6, 8}, or the number of bits occupied by the slot offset information may be from 3 to 6.

With the method for indicating a slot offset for HARQ according to embodiments of the disclosure, the network device sends the DCI to the UE, in which one or more fields in the DCI are multiplexed to carry the slot offset information between the new HARQ transmission and the HARQ retransmission, which fills a technical gap in the related art of how to indicate a slot offset between the new HARQ transmission and the HARQ retransmission when the one-shot retransmission is used for the HARQ feedback, thereby facilitating the implementation of the HARQ feedback using the one-shot retransmission.

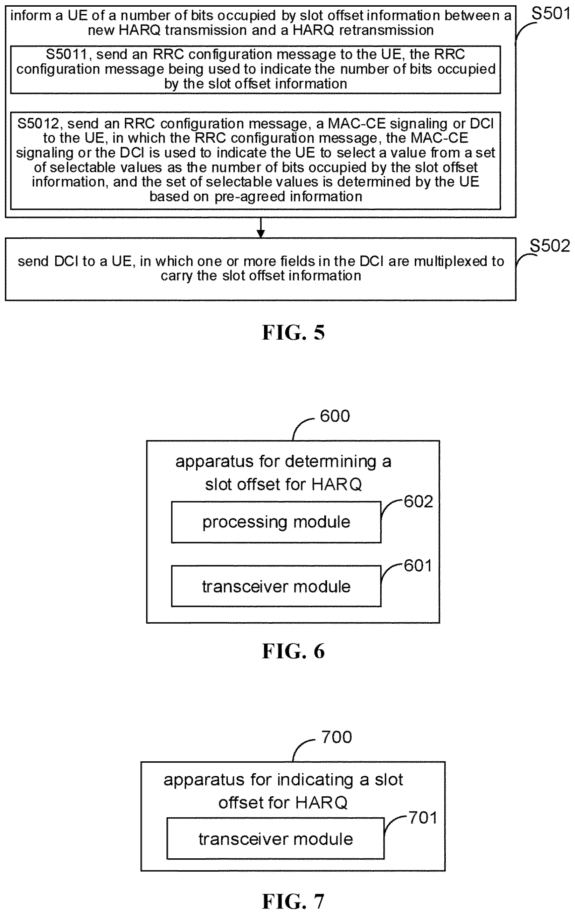

FIG. 5 is a flowchart illustrating a method for indicating a slot offset for HARQ according to an embodiment of the disclosure. As illustrated in FIG. 5, the method is performed by a network device. The method includes the following.

At step S501, a UE is informed of a number of bits occupied by slot offset information between a new HARQ transmission and a HARQ retransmission.

In some embodiments, the above step S501 may include any of the following.

At step S5011, an RRC configuration message is sent to the UE, in which the RRC configuration message is used to indicate a number of bits occupied by the slot offset information.

In this embodiment, the number of bits occupied by the slot offset information is indicated by the RRC configuration message. For example, the network device may send an RRC configuration message to the UE, in which the RRC configuration message indicates a number of bits occupied by the slot offset information, such that the UE may determine the number of bits occupied by the slot offset information based on the RRC configuration message.

At step S5012, an RRC configuration message, a MAC-CE signaling or another DCI is sent to the UE, in which the RRC configuration message, the MAC-CE signaling or another DCI is used to indicate the UE to select a value from a set of selectable values as a number of bits occupied by the slot offset information, and the set of selectable values is determined by the UE based on pre-agreed information.

In this embodiment, the UE may determine the set of selectable values for the number of bits occupied by the slot offset information based on a protocol, and the network device may send the RRC configuration message, the MAC-CE signaling or the DCI to the UE to cause the UE to determine, based on the received RRC configuration message, MAC-CE signaling or DCI, the number of bits occupied by the slot offset information from the set of selectable values.

For example, the UE may pre-agree with the network device that the number of bits occupied by the slot offset information is a value selected from {2, 4, 6, 8}, and the network device further indicates the specific value via the RRC configuration message, the MAC-CE signaling or the DCI.

At step S502, DCI is sent to the UE.

One or more fields in the DCI are multiplexed to carry slot offset information.

In some embodiments, the slot offset information is carried in a preset multiplexing priority order in one or more fields in the DCI.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

In some embodiments, the number of bits occupied by the slot offset information is a fixed value or a changeable value range.

Detailed descriptions of the above step S502 and its related details may be referred to the descriptions of the step S401 and its related details, which will not be repeated here.

With the method for indicating a slot offset for HARQ according to embodiments of the disclosure, the network device sends the DCI to the UE, in which one or more fields in the DCI are multiplexed to carry the slot offset information between the new HARQ transmission and the HARQ retransmission, which fills a technical gap in the related art of how to indicate a slot offset between the new HARQ transmission and the HARQ retransmission when the one-shot retransmission is used for the HARQ feedback, thereby facilitating the implementation of the HARQ feedback using the one-shot retransmission.

In the above embodiments of the disclosure, the methods according to embodiments of the disclosure are described from the perspectives of the network device and the UE respectively. In order to implement each of the above-described functions in the methods according to embodiments of the disclosure, the network device and the UE may include a hardware structure or a software module, and implement each of the above-described functions in the form of a hardware structure, a software module, or a combination of the hardware structure and the software module. A certain function of the above functions may be performed in the form of a hardware structure, a software module, or a combination of the hardware structure and the software module.

Corresponding to the methods for determining a slot offset for HARQ according to above-described embodiments, the disclosure also provides apparatuses for determining a slot offset for HARQ. Since the apparatuses for determining a slot offset for HARQ according to embodiments of the disclosure correspond to the methods for determining a slot offset for HARQ according to above-described embodiments, the implementations of the methods for determining a slot offset for HARQ are also applicable to the apparatuses for determining a slot offset for HARQ according to this embodiment and will not be described in detail in this embodiment.

FIG. 6 is a block diagram illustrating an apparatus 600 for determining a slot offset for HARQ according to an embodiment of the disclosure.

As illustrated in FIG. 6, the apparatus 600 includes: a transceiver module 601 and a processing module 602.

The transceiver module 601 is configured to receive DCI sent by a network device, in which one or more fields in the DCI are multiplexed to carry slot offset information between a new HARQ transmission and a HARQ retransmission.

The processing module 602 is configured to obtain, from the DCI, the slot offset information occupying a preset number of bits, and determine a slot offset between the new HARQ transmission and the HARQ transmission based on the slot offset information.

With the apparatus for determining a slot offset for HARQ according to embodiments of the disclosure, the UE may receive the DCI sent by the network device, in which one or more fields in the DCI are multiplexed to carry the slot offset information between the new HARQ transmission and the HARQ retransmission. The UE obtains, from the DCI, the slot offset information occupying the preset number of bits, to determine the slot offset between the new HARQ transmission and the HARQ retransmission, which fills a technical gap in the related art of how to determine a slot offset between the new HARQ transmission and the HARQ retransmission when the one-shot retransmission is used for the HARQ feedback, thereby facilitating the implementation of the HARQ feedback using the one-shot retransmission.

In some embodiments, the slot offset information is carried in one or more fields in the DCI in a preset multiplexing priority order.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

In some embodiments, the preset number of bits is a fixed value or a changeable value range.

In some embodiments, the processing module 602 is further configured to: determine the preset number of bits based on pre-agreed information.

In some embodiments, the processing module 602 is further configured to: determine the preset number of bits based on an RRC configuration message sent by the network device.

In some embodiments, the processing module 602 is further configured to: determine a set of selectable values for the preset number of bits based on pre-agreed information; and select a value from the set of selectable values as the preset number of bits based on an RRC configuration message, a MAC-CE signaling or DCI sent by the network device.

Corresponding to the methods for indicating a slot offset for HARQ according to the above-described embodiments, the disclosure also provides apparatuses for indicating a slot offset for HARQ. Since the apparatuses for indicating a slot offset for HARQ according to embodiments of the disclosure correspond to the methods for indicating a slot offset for HARQ according to above-described embodiments, the implementations of the methods for indicating a slot offset for HARQ are also applicable to the apparatuses for indicating a slot offset for HARQ according to this embodiment and will not be described in detail in this embodiment.

FIG. 7 is a block diagram illustrating an apparatus 700 for indicating a slot offset for HARQ according to an embodiment of the disclosure.

As illustrated in FIG. 7, the apparatus 700 includes: a transceiver module 701.

The transceiver module 701 is configured to send DCI to a UE, in which one or more fields in the DCI are multiplexed to carry slot offset information between a new HARQ transmission and a HARQ retransmission.

With the method for indicating a slot offset for HARQ according to embodiments of the disclosure, the network device sends the DCI to the UE, in which one or more fields in the DCI are multiplexed to carry the slot offset information between the new HARQ transmission and the HARQ retransmission, which fills a technical gap in the related art of how to indicate a slot offset between the new HARQ transmission and the HARQ retransmission when the one-shot retransmission is used for the HARQ feedback, thereby facilitating the implementation of the HARQ feedback using the one-shot retransmission.

In some embodiments, the slot offset information is carried in one or more fields in the DCI in a preset multiplexing priority order.

In some embodiments, the one or more fields include one or more of a MCS field of a first TB, a RV field of the first TB, or a NDI field of the first TB; in which the first TB is a first one among a plurality of TBs scheduled by the DCI; and a multiplexing priority of the MCS field is higher than a multiplexing priority of the RV field, and the multiplexing priority of the RV field is higher than a multiplexing priority of the NDI field.

In some embodiments, for each multiplexed field of the one or more fields, the slot offset information is carried in an order from low bit to high bit in the field.

In some embodiments, a bit that is not used to carry the slot offset information in each multiplexed field of the one or more fields is padded with 0.

In some embodiments, the preset number of bits is a fixed value or a changeable value range.

In some embodiments, the transceiver module 701 is configured to: send an RRC configuration message to the UE, in which the RRC configuration message is used to indicate a number of bits occupied by the slot offset information.

In some embodiments, the transceiver module 701 is configured to: send an RRC configuration message, a MAC-CE signaling or another DCI to the UE, in which the RRC configuration message, the MAC-CE signaling or the DCI is used to indicate the UE to select a value from a set of selectable values as a number of bits occupied by the slot offset information, and the set of selectable values is determined by the UE based on pre-agreed information.

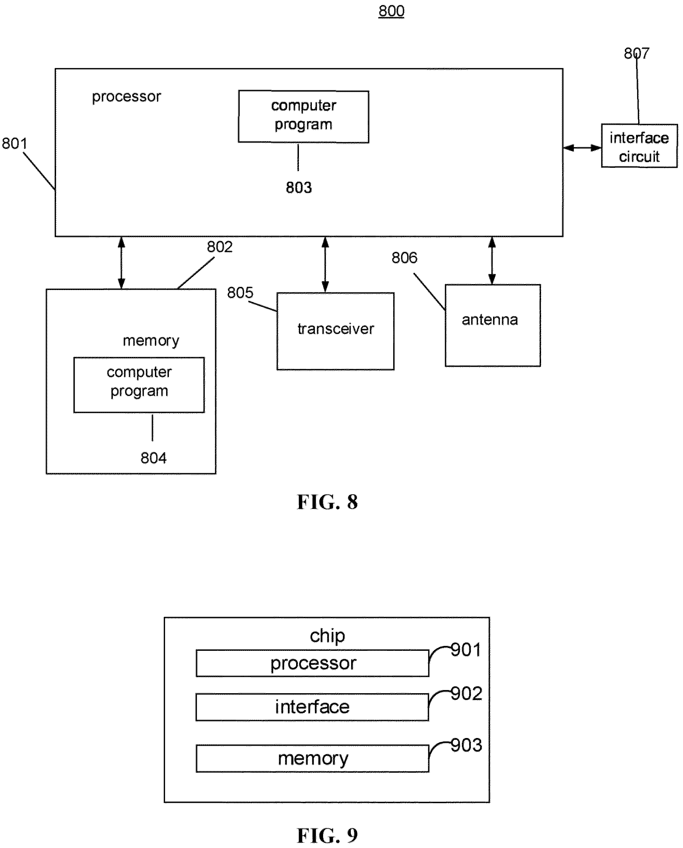

FIG. 8 is a schematic diagram illustrating a communication device 800 according to an embodiment of the disclosure. The communication device 800 may be a network device or a UE, or the communication device 800 may be a chip, a chip system or a processor that supports the network device to realize the above-described methods, or the communication device 800 may be a chip, a chip system or a processor that supports the UE to realize the above-described methods. The device may be used to perform the methods described in the above method embodiments with reference to the description of the above-described method embodiments.

The communication device 800 may include one or more processors 801. The processor 801 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing a computer program, and processing data of the computer program.

In some embodiments, the communication device 800 may include one or more memories 802 on which a computer program 804 may be stored. The processor 801 executes the computer program 804 to cause the communication device 800 to perform the methods described in above method embodiments. In some embodiments, the memory 802 may store data. The communication device 800 and the memory 802 may be provided separately or may be integrated together.

In some embodiments, the communication device 800 may also include a transceiver 805 and an antenna 806. The transceiver 805 may be referred to as a transceiver unit, a transceiver machine, or a transceiver circuit, for realizing receiving and transmission functions. The transceiver 805 may include a receiver and a transmitter. The receiver may be referred to as a receiving machine or a receiving circuit, for realizing the receiving function. The transmitter may be referred to as a transmitter machine or a transmitting circuit, for realizing the transmission function.

In some embodiments, the communication device 800 may also include one or more interface circuits 807. The interface circuit 807 is used to receive code instructions and transmit them to the processor 801. The processor 801 runs the code instructions to cause the communication device 800 to perform the methods described in method embodiments.

The communication device 800 is a UE. The processor 801 is used to perform the step S202 in FIG. 2, the step S302 (which includes the steps S3021 to S3023) and the step S303 in FIG. 3. The transceiver 805 is used to perform the step S201 in FIG. 2 and the step S301 in FIG. 3.

The communication device 800 is a network device. The transceiver 805 is used to perform the step S401 in FIG. 4, the step S501 (which includes the steps S5021 to S5022) and the step S502 in FIG. 5.

In an implementation, the processor 801 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 801 may store a computer program 803. When the computer program 803 runs on the processor 801, the communication device 800 is caused to perform the methods described in method embodiments above. The computer program 803 may be solidified in the processor 801, and in such case the processor 801 may be implemented by hardware.

In an implementation, the communication device 800 may include circuits. The circuits may implement the sending, receiving or communicating function in preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of above embodiments may be a network device or a UE, but the scope of the communication device described in the disclosure is not limited thereto, and the structure of the communication device may not be limited by FIG. 8. The communication device may be a stand-alone device or may be part of a larger device. For example, the described communication device may be:
(1) a stand-alone IC, a chip, a chip system or a subsystem;
(2) a collection of ICs including one or more ICs, for example, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication device may be a chip or a chip system, the schematic structure of the chip is illustrated in FIG. 9. The chip illustrated in FIG. 9 includes a processor 901 and an interface 902. There may be one or more processors 901 and a plurality of interfaces 902.

In the case where the chip is used to realize functions of the UE in embodiments of the disclosure, the processor 901 is used to execute the step S202 in FIG. 2, the step S302 (including the steps S3021 to S3023) and the step S303 in FIG. 3, and the interface 902 is used to execute the step S201 in FIG. 2 and the step S301 in FIG. 3.

In the case where the chip is used to realize the functions of the network device in embodiments of the disclosure, the interface 902 is used to perform the step S401 in FIG. 4, the step S501 (including the steps S5021 to S5022) and the step S502 in FIG. 5.

In some examples, the chip further includes a memory 903 for storing necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of embodiments of the disclosure.

Embodiments of the disclosure also provide a system. The system includes a communication device acting as a UE described in embodiments of FIG. 6 and a communication device acting as a network device described in aforementioned embodiments of FIG. 7. Or the system includes a communication device acting as a UE and a communication device acting as a network device described in aforementioned embodiment of FIG. 8.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, above embodiments may be implemented, in whole or in part, in the form of a computer program product. The computer program product includes one or more computer programs. When loading and executing the computer program on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to any computer program product, device and/or apparatus (e.g., disk, CD-ROM, memory, programmable logic device (PLD)) used to provide machine instructions and/or data to a programmable processor. The terms include a machine-readable medium that receives machine instructions as machine-readable signals. The term "machine-readable signal" refers to any signal used to provide machine instructions and/or data to a programmable processor.

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: a Local Area Network (LAN), a Wide Area Network (WAN), and the Internet.

The computer system may include a client and a server. The client and server are generally remote from each other and interacting through a communication network. The client-server relation is generated by a computer program running on the respective computers and having a client-server relation with each other.

It is understandable that the steps may be reordered, added or deleted using various forms of the processes shown above. For example, the steps in the disclosure may be performed in parallel or sequentially or in different orders, as long as the desired results of the technical solutions disclosed in the disclosure are achieved, which are not limited herein.

Furthermore, it is understandable that various embodiments described in the disclosure may be implemented individually or in combination with other embodiments if it is allowed by the solution.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for determining a slot offset for Hybrid Automatic Repeat reQuest (HARQ), performed by User Equipment (UE), comprising:
receiving Downlink Control Information (DCI) sent by a network device, wherein one or more fields in the DCI are multiplexed to carry slot offset information between a new HARQ transmission and a HARQ retransmission; and
obtaining, from the DCI, the slot offset information occupying a preset number of bits, and determining a slot offset between the new HARQ transmission and the HARQ retransmission based on the slot offset information.

2. The method of claim 1, wherein the slot offset information is carried in a preset multiplexing priority order in one or more fields in the DCI.

3. The method of claim 2, wherein the one or more fields comprise one or more of a Modulation and coding scheme (MCS) field of a first Translation Block (TB), a Redundancy Version (RV) field of the first TB, or a New data indicator (NDI) field of the first TB;
wherein the first TB is a first one among a plurality of TBs scheduled by the DCI; and
a multiplexing priority of the MCS field is higher than a multiplexing priority of the RV field, and the multiplexing priority of the RV field is higher than a multiplexing priority of the NDI field.

4. The method of claim 2 or 3, wherein for each multiplexed field of the one or more fields, the slot offset information is carried in an order from low bit to high bit in the field.

5. The method of claim 4, wherein a bit that is not used to carry the slot offset information in each multiplexed field of the one or more fields is padded with 0.

6. The method of any one of claims 1 to 5, wherein the preset number of bits is a fixed value or a changeable value range.

7. The method of any one of claims 1 to 6, further comprising:
determining the preset number of bits based on pre-agreed information.

8. The method of any one of claims 1 to 6, further comprising:
determining the preset number of bits based on a Radio Resource Control (RRC) configuration message sent by the network device.

9. The method of any one of claims 1 to 6, further comprising:
determining a set of selectable values for the preset number of bits based on pre-agreed information; and
selecting a value from the set of selectable values as the preset number of bits based on an RRC configuration message, a Media Access Control-Control Element (MAC-CE) signaling or DCI sent by the network device.

10. A method for indicating a slot offset for Hybrid Automatic Repeat reQuest (HARQ), performed by a network device, comprising:
sending Downlink Control Information (DCI) to User Equipment (UE), wherein one or more fields in the DCI are multiplexed to carry slot offset information between a new HARQ transmission and a HARQ retransmission.

11. The method of claim 10, wherein the slot offset information is carried in a preset multiplexing priority order in one or more fields in the DCI.

12. The method of claim 10, wherein the one or more fields comprise one or more of a Modulation and coding scheme (MCS) field of a first Translation Block (TB), a Redundancy Version (RV) field of the first TB, or a New data indicator (NDI) field of the first TB;
wherein the first TB is a first one among a plurality of TBs scheduled by the DCI; and
a multiplexing priority of the MCS field is higher than a multiplexing priority of the RV field, and the multiplexing priority of the RV field is higher than a multiplexing priority of the NDI field.

13. The method of claim 11 or 12, wherein for each multiplexed field of the one or more fields, the slot offset information is carried in an order from low bit to high bit in the field.

14. The method of claim 13, wherein a bit that is not used to carry the slot offset information in each multiplexed field of the one or more fields is padded with 0.

15. The method of any one of claims 10 to 14, wherein a number of bits occupied by the slot offset information is a fixed value or a changeable value range.

16. The method of any one of claims 10 to 15, further comprising:
sending a Radio Resource Control (RRC) configuration message to the UE, wherein the RRC configuration message is used to indicate a number of bits occupied by the slot offset information.

17. The method of any one of claims 10 to 15, further comprising:
sending a Radio Resource Control (RRC) configuration message, a Media Access Control-Control Element (MAC-CE) signaling or another DCI to the UE, wherein the RRC configuration message, the MAC-CE signaling or another DCI is used to indicate the UE to select a value from a set of selectable values as a number of bits occupied by the slot offset information, and the set of selectable values is determined by the UE based on pre-agreed information.

18. An apparatus for determining a slot offset for Hybrid Automatic Repeat reQuest (HARQ), comprising:
a transceiver module, configured to receive Downlink Control Information (DCI) sent by a network device, wherein one or more fields in the DCI are multiplexed to carry slot offset information between a new HARQ transmission and a HARQ retransmission; and
a processing module, configured to obtain the slot offset information occupying a preset number of bits from the DCI, and determine a slot offset between the new HARQ transmission and the HARQ retransmission based on the slot offset information.

19. An apparatus for indicating a slot offset for Hybrid Automatic Repeat reQuest (HARQ), comprising:
a transceiver module, configured to send Downlink Control Information (DCI) to User Equipment (UE), wherein one or more fields in the DCI are multiplexed to carry slot offset information between a new HARQ transmission and a HARQ retransmission.

20. A communication device, comprising a transceiver, a memory and a processor connected to the transceiver and the memory, wherein the processor is configured to control transmitting and receiving of wireless signals of the transceiver by executing computer-executable instructions on the memory, and the processor is configured to perform the method of any one of claims 1 to 9.

21. A communication device, comprising a transceiver, a memory and a processor connected to the transceiver and the memory , wherein the processor is configured to control transmitting and receiving of wireless signals of the transceiver by executing computer-executable instructions on the memory, and the processor is configured to perform the method of any one of claims 10 to 18.

22. A computer storage medium having computer executable instructions stored thereon, wherein when the computer executable instructions are executed by a processor, the method of any one of claims 1 to 9 is performed.

23. A computer storage medium having computer executable instructions stored thereon, wherein when the computer executable instructions are executed by a processor, the method of any one of claims 10 to 18 is performed.
